# EUROPÄISCHE PATENTSCHRIFT

(11) **EP 0 974 480 B1**
(45) Veröffentlichungstag und Bekanntmachung des Hinweises auf die Patenterteilung: **23.05.2001**
(21) Anmeldenummer: 98113503.1
(22) Anmeldetag: 20.07.1998
(51) Int. Cl.: B60J 7/12

(54) **Kraftfahrzeugverdecksystem**
Folding top system for motor vehicle
Construction de toit pliant pour vehicule automobile

(43) Veröffentlichungstag der Anmeldung: 26.01.2000
(73) Patentinhaber: Dura Convertible Systems GmbH, 50735 Köln (DE)
(72) Erfinder: Mac Farland, David Dipl.-Ing., 85716 Unterschleissheim (DE)
(74) Vertreter: Strobel, Wolfgang, Dipl.-Ing.

(56) Entgegenhaltungen:
- EP-A- 0 733 505
- DE-C- 601 041

## Beschreibung

Die vorliegende Erfindung betrifft ein Kraftfahrzeugverdecksystem, insbesondere für Cabriolets, nach dem Oberbegriff des Anspruchs 1.

Offene Kraftfahrzeuge, in Form von Cabriolets, Speedster etc. erfreuen sich steigender Beliebtheit. Dabei werden die Fahrzeuge zunehmend nicht nur als reine "Schönwetter"-Fahrzeuge in der warmen Jahreszeit eingesetzt, sondern müssen auch für alle Witterungsbedingungen tauglich sein, um als Alternative gegenüber herkömmlichen Limousinenfahrzeugen oder Coupés bestehen zu können.

Dies bedeutet, daß einerseits stabile Verdecksysteme notwendig sind, die gegenüber allen Witterungsbedingungen, insbesondere im Winter gegen Schnee und Eis beständig sind, und jederzeit, sozusagen bei jedem warmen Sonnenstrahl, gleich in welcher Jahreszeit, schnell und einfach geöffnet und anschließend wieder geschlossen werden können.

Aufgrund der Anforderung des alltäglichen Einsatzes derartiger Fahrzeuge, werden weiterhin gesteigerte Anforderungen an die Möglichkeit der Zuladung gestellt, um auch größere Mengen von Gepäck und von Einkäufen für den Haushalt und die Wohnung aufnehmen zu können.

Ein gattungsgemäßes Kraftfahrzeugverdecksystem, wie beispielsweise aus EP-A-0 733 505 bekannt, weist ein faltbares Verdeck auf, in dem eine Heckscheibe angeordnet ist, wobei das faltbare Verdeck an einem Gestänge befestigt ist, das gelenkig gelagerte Gestängestreben aufweist, die mit mehreren Querspriegeln verbunden sind, die sich in Querrichtung des Fahrzeugs erstrecken und dem Spannen des Verdecks dienen, wobei ein Verdeckkasten vorgesehen ist, in dem das geöffnete und gefaltete Verdeck aufnehmbar ist. Zur zumindest teilweise Abdeckung des Verdecks ist eine Verdeckklappe vorgesehen, die den Verdeckkasten sowohl in geöffneter als auch in geschlossener Stellung des Verdecks unvollständig bedeckt.

Nachteilig bei den Kraftfahrzeugverdecksytemen des Standes der Technik ist, daß, sofern sie eine Verdeckklappe aufweisen, das gefaltete Verdeck weit in den Kofferraumbereich hineinverschoben wird, und entsprechend klein zusammengefaltet wird, was einerseits das Kofferraumvolumen erheblich einschränkt und andererseits die Möglichkeit einer bei geschlossenen Fahrzeugen üblichen starren Glasheckscheibe mit entsprechend darin angeordneten Zusatzelementen, wie Heckscheibenheizung, Antennendrähte etc. unmöglich macht.

Noch ungünstigere Kraftfahrzeugverdecksysteme, selbst bei sehr hochwertigen Fahrzeugen bieten keine vollständige Versenkung des Kraftfahrzeugverdecks, so daß auch keine Verdeckklappe vorgesehen ist, und das faltbare Verdeck im gefalteten Zustand nicht vollständig verstaut ist und noch aus dem Fahrzeug herausragt. Zu diesen aerodynamischen Nachteilen gesellen sich dann auch starke ästhetische Nachteile.

Der vorliegenden Erfindung liegt deshalb die Aufgabe zugrunde, ein Kraftfahrzeugverdecksystem der eingangs beschriebenen Art derart zu verbessern, daß das faltbare Verdeck vollkommen verdeckbar und mittels einer Heckverdeckklappe im Fahrzeug im geöffneten Zustand des Verdecks anordenbar ist, und daß gleichzeitig ein Höchstmaß an verfügbarem Stauraum, insbesondere an Kofferraumvolumen, im Fahrzeug geschaffen wird.

Diese Aufgabe wird durch die Merkmale des Anspruchs 1 gelöst.

Dadurch, daß eine in Form einer Lagerplatte ausgebildete schwenkbare Lagereinrichtung des Gestänges im Bereich des Verdeckkasten vorgesehen ist, die von einer aufrechten Verdeckschließstellung in eine geklappte Verdecköffnungsstellung in Richtung Fahrzeugheck verschwenkbar ist, wird erreicht, daß das gesamte Verdeckgestänge mit daran befestigtem Verdeck erheblich tiefer in das Fahrzeug eingeschwenkt werden kann, wobei zugleich der Heckscheibenbereich tiefer abgesenkt werden kann, ohne daß dieser nach hinten in Richtung Kofferraum weit verschwenkt wird, wodurch die Möglichkeit geschaffen wird, daß auch starre Heckscheiben, insbesondere aus Glas im Fahrzeugverdeck aufgenommen werden können.

Damit werden wesentliche Nachteile des Standes der Technik überwunden und neben dem vergrößerten Stauraum auch eine zusätzlich ästhetisch erheblich ansprechendere Gestaltung des geöffneten Fahrzeugs erreicht.

Vorteilhafterweise ist der untere Bereich der Lagerplatte gelenkig mit dem Fahrzeug verbunden, so daß die Lagerplatte um diese Gelenkachse verschwenkbar ist.

Mit Vorteil ist die Lagerplatte zum unteren Bereich hin spitzwinklig ausgebildet.

Weiterhin weist das Gestänge vorteilhafterweise zwei Seitenabschnitte auf, von denen jeder vorzugsweise vier Gestänge- oder Gelenkstreben aufweist. Die Seitenabschnitte befinden sich an der jeweiligen Fahrzeugaußenlängsseite zum Aufspannen des Verdecks und die Gelenkstreben dienen zum Falten der Seitenabschnitte des Gestänges.

Vorteilhafterweise sind jeweils zwei Gelenkstreben paarweise gelenkig miteinander verbunden, und sind die beiden Paare einer Seite miteinander gelenkig verbunden, wodurch eine gut geführte faltbare Gestängeausführung erreicht wird. Durch die oben beschriebene Ausgestaltung erfolgt auch eine gute Zwangsführung der Gelenkstreben untereinander zum einwandfreien und stabilen Auf- und Einklappen des Verdecks.

Weiterhin ist vorteilhaft, daß die unteren Abschnitte einer Gelenkstrebe eines jeden Gelenkstrebenpaares mit der Lagereinrichtung gelenkig verbunden sind. Dies schafft vorteilhafterweise eine Verschiebemöglichkeit des unteren Gestängeangriffspunktes nach hinten und ermöglicht ein noch kleineres Zusammenfalten des Verdecks samt Gestänge.

Vorteilhafterweise weist das erfindungsgemäße Kraftfahrzeugverdecksystem einen Stoffspannbügel auf, der drehbar an beiden seitlichen Lagereinrichtungen angeordnet ist und mit dem unteren Rand des Verdecks verbunden ist. Dadurch wird ein korrektes Spannen des Verdecks auf sehr einfache Weise ermöglicht.

Vorteilhafterweise greift an dem Stoffspannbügel eine Einrichtung zur Einstellung der Stoffspannung an. Dies ermöglicht mit besonderem Vorteil das Nachspannen des Verdeckstoffes, da der Stoff aufgrund seiner wenn auch begrenzten Eigenelastizität insbesondere durch Witterungseinflüsse etwas nachgibt, so daß ein Nachspannen zum korrekten Sitz des Verdecks notwendig ist. Dieser Vorteil erstreckt sich auch auf die Montage eines derartigen Verdecks, da durch unvermeidbare Fertigungstoleranzen in der Regel eine Nachjustierung für den exakt korrekten Sitz des Verdecks notwendig ist. Die korrekte Einstellung kann somit bereits bei der Montage auf einfachste Weise erfolgen, was wiederum die Produktionszeiten und damit die -kosten senkt.

In einer bevorzugten Ausführungsform weist die Stoffspanneinrichtung zwei Stelltriebe auf, die an den beiden Kraftfahrzeugseiten im Bereich des Verdeckkastens am Fahrzeug gelagert sind. Dadurch wird durch Betätigung der Stelltriebe der Stoffspannbügel entsprechend bewegt und die korrekte Verdeckspannung erzeugt.

Alternativ kann ein Stelltrieb in der Mitte des Fahrzeugs oder nicht weit davon vorgesehen sein.

Mit einem weiteren großen Vorteil weist das erfindungsgemäße Kraftfahrzeugverdecksystem eine verschwenkbare Bodenplatte auf, deren Schwenkachse im hinteren oberen Endbereich des Verdeckkastens liegt. Dadurch wird die Möglichkeit geschaffen, das Volumen des Verdeckkastens bei geschlossenem Verdeck, also dann, wenn sich das Verdeck nicht im Verdeckkasten befindet, zu verkleinern, und dadurch den Stauraum, insbesondere das Kofferraumvolumen des Fahrzeugs erheblich zu vergrößern.

Weitere Einzelheiten, Merkmale und Vorteile der Erfindung ergeben sich aus der nachfolgenden Beschreibung unter Bezugnahme auf die Zeichnungen. Darin zeigt:
- Figur 1: eine Seitenansicht eines als Cabriolet ausgebildeten Kraftfahrzeugs mit einem erfindungsgemäßen Kraftfahrzeugverdecksystem in eingefaltetem Zustand und mit aufgestelltem Windschutz;
- Figur 2: die Ansicht von Figur 1 mit eingeklapptem Windschutz;
- Figur 3: eine analoge Ansicht zu Figur 2 mit einer angehobenen Verdeckklappe;
- Figur 4: eine ähnliche Ansicht zu der von Figur 3 jedoch mit teilweise aufgeklapptem Gestänge;
- Figur 5: eine Seitenansicht eines Cabriolets mit zugeklapptem Verdeck und noch geöffneter Verdeckklappe;
- Figur 6: eine analoge Ansicht zu Figur 5 doch mit vollkommen geschlossenem Kraftfahrzeugverdeck und Verdeckklappe.

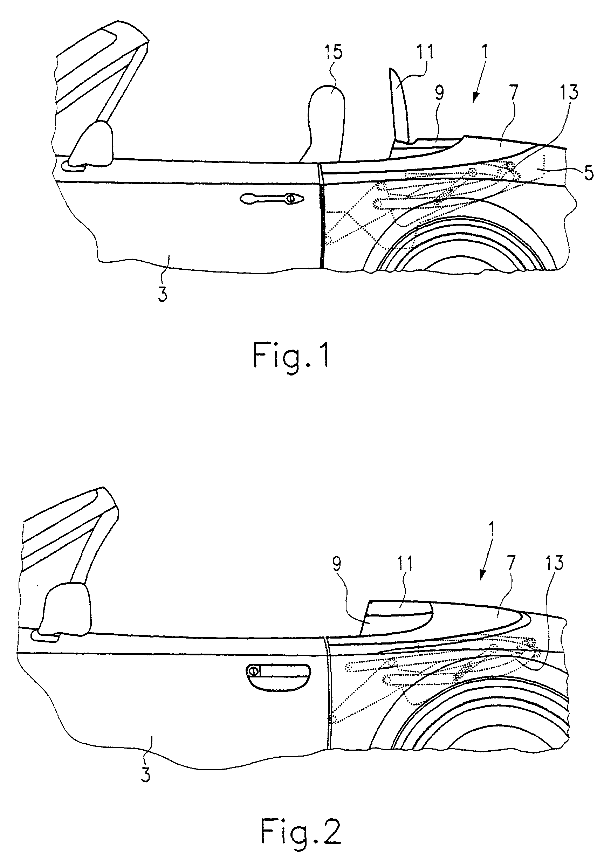

Nachfolgend wird detailliert ein erfindungsgemäßes Kraftfahrzeugverdecksystem 1 anhand der Figuren 1 bis 6 beschrieben. Dabei wird in Stufen der Mechanismus von vollständig geöffnetem Verdeck und eingefaltetem Verdecksystem bis zum geschlossenen Zustand des Fahrzeugverdecks beschrieben.

In Figur 1 ist ein erfindungsgemäßes Kraftfahrzeugverdecksystem 1 in einem Cabriolet 3 dargestellt. Das Verdeck 13 mit Gestänge 17 und Lagereinrichtung 23 ist in einem eingefalteten Zustand in einem Verdeckkasten 5 untergebracht. Die Einzelheiten des Gestänges und der Lagereinrichtung werden später beschrieben.

Der Verdeckkasten 5 ist von einer Verdeckklappe 7 geschlossen, die sich bogenförmig vom hinteren Kotflügel weg über den Verdeckkasten symmetrisch zur anderen Seite bis wieder an die Fahrzeugtür erstreckt.

Eine Zusatzverdeckklappe 9 ist vorgesehen, die an ihrer Oberseite einen verschwenkbaren Windschutz 11 aufweist, der im dargestellten Beispielsfall von Figur 1 in Windschutzfunktion aufgestellt ist.

Wie weiterhin ersichtlich, erstreckt sich der Verdeckkasten 5 vom oberen Bereich des Kofferraumes schräg über die Hinterachse nach vorne und bildet den Aufnahmeraum des eingefalteten Verdecks 13.

In Figur 2 ist der Windschutz 11 nach hinten umgeklappt, so daß der Verdeckkasten im wesentlichen kurz hinter den Vordersitzen 15 des Fahrzeugs 3 geschlossen ist.

Die Zusatzverdeckklappe 9 ist bewegbar, insbesondere verschwenkbar nach vorne angeordnet, und ist insbesondere hinter den Fahrzeugsitzen 15 einschwenkbar.

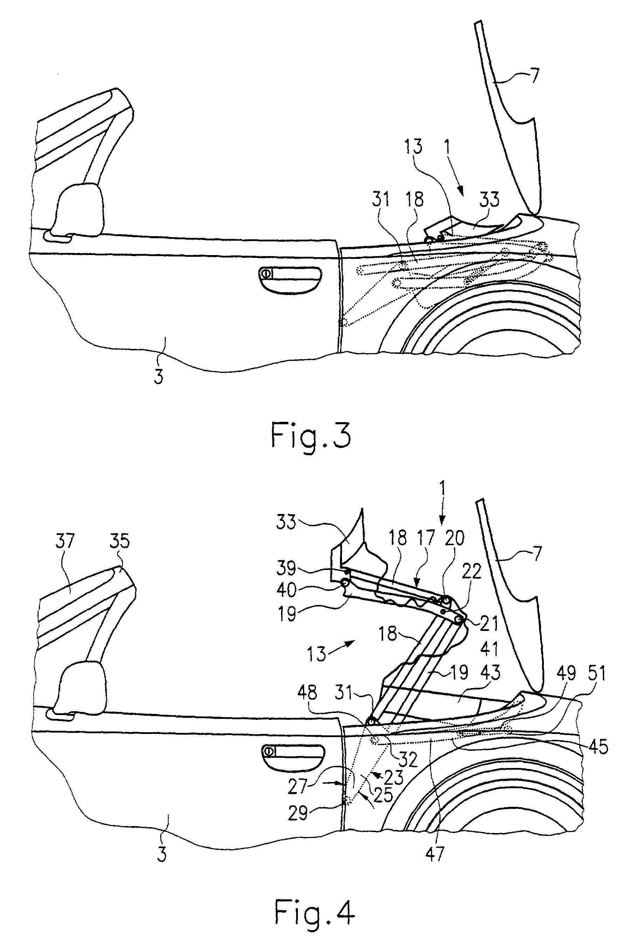

In Figur 3 ist die Zusatzverdeckklappe 9 zusammen mit dem Windschutz 11 verschwenkt und versenkt worden und die Verdeckklappe 7 ist geöffnet. Das Verdeck 13 befindet sich weiterhin in der eingefalteten, zusammengelegten Stellung.

In Figur 4 ist eine Stellung des Verdecks 13 in halb aufgeklappter Position dargestellt. Anhand dieser Figur wird nunmehr der Aufbau des erfindungsgemäßen Kraftfahrzeugverdecksystems 1 beschrieben.

Das Verdeck 13 weist ein Gestänge 17 auf, das auf jeder Längsseite des Fahrzeugs 3 zwei Paare von Gelenk- oder Gestängestreben 18 und 19 aufweist.

Jedes Paar von Gestängestreben 18 und 19 ist gelenkig bei 20 bzw. 21 untereinander verbunden, und zusätzlich ist das Gestängestrebenpaar 18 gelenkig bei 22 mit dem Gestängestrebenpaar 19 verbunden.

Im unteren Bereich ist jedes Paar von Gestängestreben 18 und 19 mit einer Lagereinrichtung 23 gelenkig verbunden. Die Lagereinrichtung 23 ist im dargestellten Ausführungsbeispiel in Form eines plattenförmigen Körpers bzw. einer Lagerplatte 25 ausgebildet, die spitzwinklig und dreieckförmig ausgestaltet ist. Der spitze Winkel 27 der Lagerplatte 25 befindet sich am unteren Ende der Lagerplatte 25 und diese ist gelenkig bei 29 mit der Kraftfahrzeugkarosserie verbunden.

Die beiden unteren Gestängestreben 18 und 19 sind mit der Lagerplatte 25 ebenfalls über Gelenkverbindungen 31 und 32 verbunden.

Am vorderen Ende der beiden Gestängestrebenpaare 18 und 19 ist ein vorderer Querspriegel gelenkig verbunden, der zur vorderen Lagesicherung des Verdecks 13 an dem oberen Randbereich 35 der Frontscheibe 37 des Fahrzeugs dient.

Durch die gelenkige Anordnung mittels Gelenkverbindungen 39 und 40 wird der Querspriegel 33 durch die Bewegung der Gestängestreben 18 und 19 entsprechend verschwenkt, wie das im Vergleich der Figuren 3 und 4 ersichtlich ist.

Nur schematisch ist die Linie einer Verdeckplane 41 bzw. eines Verdeckstoffes dargestellt. Die Verdeckplane 41 verläuft vom vorderen Querspriegel 33 über (nicht dargestellte) weitere Querspriegel bis zu einer Heckscheibe 43 und weiter bis zu einer Stoffspanneinrichtung 45.

Die Heckscheibe 43 ist vorzugsweise eine starre Scheibe aus Glas, was aufgrund der platzsparenden Verdeckunterbringung möglich ist. Dies hat wiederum den Vorteil, daß die bei normalen Fahrzeugen üblicherweise in Heckscheiben eingebrachten Einrichtungen, wie Heizdrähte, Antennendrähte etc. ebenfalls vorhanden sein können.

Die Stoffspanneinrichtung 45 weist einen Spannbügel 47 auf, der an den seitlichen Lagereinrichtungen 23 bei 48 gelenkig gelagert ist. Ein Stelltrieb 49, vorzugsweise an jeder Seite des Fahrzeugs, ist gelenkig mit dem Stoffspannbügel 47 einerseits und gelenkig mit der Fahrzeugkarosserie bei 51 verbunden und an der Kraftfahrzeugkarosserie festgelegt. Durch Betätigen des Stelltriebs 49 kann der Stoffspannbügel 47 in seiner Lage verändert werden, wodurch ein Stoffspannen sowohl bei der Montage als auch nachträglich wegen Ermüden des Stoffmaterials erfolgen kann.

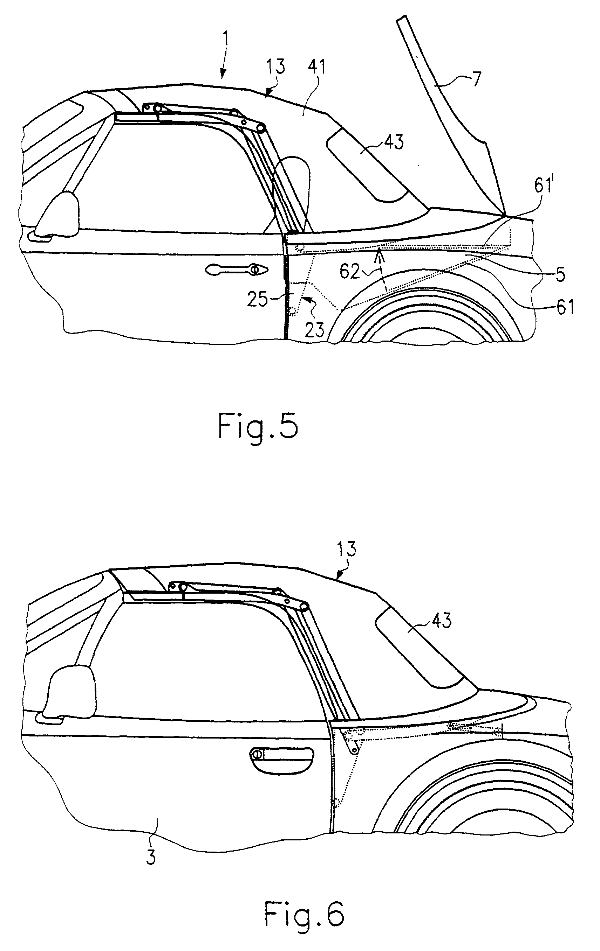

In Figur 5 ist das Fahrzeug mit geschlossenem Verdeck 13 dargestellt, wobei die Verdeckklappe 7 sich noch in geöffneter Stellung befindet. Die Lagereinrichtung 23 mit Lagerplatte 25 ist in ihre vorderste Position verschwenkt, in der sie gleichzeitig aufrecht steht.

Der Verdeckkasten 5 weist eine Bodenplatte 61 auf, die von ihrer unteren Stellung in eine obere Stellung 61' gemäß gestricheltem Pfeil 62 verschwenkbar ist. Ersichtlich ergibt sich dadurch ein erheblich vergrößerter Stauraum im Kraftfahrzeug, der insbesondere von der Kofferraumseite her beladbar ist.

In Figur 6 ist schließlich das Cabriolet 3 in kompletter Schließstellung des Verdecks 13 dargestellt.

Wie insbesondere in Zusammenschau der Figuren 3 bis 5 ersichtlich, wird durch das Verschwenken der Lagereinrichtung 23 nach hinten bzw. von hinten wieder nach vorne eine erheblich kompaktere Bauweise geschaffen. Beim Verschwenken von der Stellung gemäß Figur 5 in die Stellung gemäß Figur 3 bewegt sich die Gestängestrebe 18 entlang des Gelenkpunktes, d. h. die Gelenkverbindung 31 bewegt sich an bzw. in der Strebe 18. Dies führt zu weiterer kompakter Bauweise und insbesondere eine Verlagerung des bisher üblichen Verdecksystems in Richtung Fahrersitz, wodurch eine erheblich kompaktere Faltstellung erzielt wird.

Die kompaktere Faltstellung wird sowohl in weniger weiter Ausladung nach hinten als auch in einem tieferen Einfalten in den Verdeckkasten erreicht, wodurch die Verdeckklappe 7 in ästhetisch äußerst ansprechender Weise über das Verdeck geschwenkt werden kann. Somit werden bei dem neuen Kraftfahrzeugverdecksystem viele Vorteile auf einmal verwirklicht, wie dies oben ausgeführt ist. Dabei weist das Kraftfahrzeugverdecksystem 1 eine äußerst stabile Ausgestaltung auf, die auch den Anforderungen bei hoher Geschwindigkeit des Fahrzeugs genügen.

## Patentansprüche

1. Kraftfahrzeugverdecksystem (1) für Cabriolets (3), mit
einem faltbaren Verdeck (13), in dem eine Heckscheibe (43) angeordnet ist,
einem Gestänge, das gelenkig gelagerte Gestängestreben (18, 19) aufweist,
mehreren Querspriegeln, die sich in Querrichtung des Fahrzeugs erstrekken,
einem Verdeckkasten (5), in dem das gefaltete Verdeck (13) aufnehmbar ist,
einer Verdeckklappe (7), die den Verdeckkasten (5) zumindest teilweise überdeckt,
dadurch gekennzeichnet, daß
im Bereich des Verdeckkastens (5) eine in Form einer Lagerplatte (25) ausgebildete schwenkbare Lagereinrichtung (23) des Gestänges vorgesehen ist, die von einer aufrechten Verdeckschließstellung in eine geklappte Verdecköffnungsstellung in Richtung Fahrzeugheck verschwenkbar ist.

2. Kraftfahrzeugverdecksystem (1) nach Anspruch 1, dadurch gekennzeichnet, daß die Lagerplatte (25) einen unteren Bereich aufweist, der gelenkig (29) mit dem Fahrzeug verbunden ist.

3. Kraftfahrzeugverdecksystem nach Anspruch 1 oder 2, dadurch gekennzeichnet, daß die Lagerplatte (25) eine zum unteren Bereich hin spitzwinklige, bevorzugterweise dreieckige Form aufweist.

4. Kraftfahrzeugverdecksystem nach einem der Ansprüche 1 bis 3, dadurch gekennzeichnet, daß das Gestänge zwei Seitenabschnitte aufweist, von denen jeder vier Gestängestreben oder Gelenkstreben (18, 19) aufweist.

5. Kraftfahrzeugverdecksystem nach Anspruch 4, dadurch gekennzeichnet, daß jeweils zwei Gelenkstreben paarweise (18, 19) gelenkig miteinander verbunden sind.

6. Kraftfahrzeugverdecksystem nach Anspruch 5, dadurch gekennzeichnet, daß die beiden Paare (18, 19) einer Seite miteinander gelenkig (bei 22) verbunden sind.

7. Kraftfahrzeugverdecksystem nach einem der Ansprüche 4 bis 6, dadurch gekennzeichnet, daß die unteren Abschnitte einer Gelenk- oder Gestängestrebe (18, 19) eines jeden Gelenkstrebenpaares mit der Lagereinrichtung (25) verbunden sind.

8. Kraftfahrzeugverdecksystem nach einem der Ansprüche 1 bis 7, dadurch gekennzeichnet, daß es eine Stoffspanneinrichtung (45) vorzugsweise mit einem Stoffspannbügel (47) aufweist, der drehbar an beiden seitlichen Lagereinrichtungen (23) angeordnet ist und mit dem unteren Rand des Verdecks (13) verbunden ist.

9. Kraftfahrzeugverdecksystem nach Anspruch 8, dadurch gekennzeichnet, daß an dem Stoffspannbügel (47) eine Einrichtung zur Einstellung der Stoffspannung (49) angreift.

10. Kraftfahrzeugverdecksystem nach Anspruch 9, dadurch gekennzeichnet, daß die Stoffspanneinrichtung zwei Stelltriebe (49) aufweist, die an den beiden Kraftfahrzeugseiten im Bereich des Verdeckkastens (5) am Fahrzeug (51) gelagert sind.

11. Kraftfahrzeugverdecksystem nach einem der Ansprüche 1 bis 10, dadurch gekennzeichnet, daß der Verdeckkasten (5) eine verschwenkbare Bodenplatte (61) aufweist, deren Schwenkachse im oberen hinteren Bereich des Verdeckkastens liegt.

## Claims

1. A motor vehicle folding top system (1) for convertibles (3) comprising
a foldable folding top (13), in which a rear window (43) is positioned,
a rod which has support rods (18, 19) supported in an articulated manner,
several transverse support units which extend in the transverse direction of the motor vehicle,
a folding top casing (5), wherein the folded folding top (13) can be accommodated,
a folding top flap (7), which at least partially covers the folding top casing (5),
characterised in that
in the area of the folding top casing (5) a swivelling supporting device (23) of the rod is provided, which is formed as a bearing plate (25) and which can be swivelled from an upright closed position of the folding top in the direction of the rear of the motor vehicle into a folded open position of the folding top.

2. A motor vehicle folding top system (1) in accordance with claim 1, characterised in that the bearing plate (25) comprises a lower area which is connected with the motor vehicle in an articulated (29) manner.

3. A motor vehicle folding top system in accordance with claim 1 or 2, characterised in that the bearing plate (25) is acutely angled towards the lower area and preferably is of triangular shape.

4. A motor vehicle folding top system in accordance with one of the claims 1 to 3, characterised in that the rod has two lateral sections, each one of which has four support rods or articulated support rods (18, 19):

5. A motor vehicle folding top system in accordance with claim 4, characterised in that every two articulated support rods are connected with one another in an articulated manner in pairs (18, 19).

6. A motor vehicle folding top system in accordance with claim 5, characterised in that both of the pairs (18, 19) of one side are connected with one another in an articulated manner (at point 22).

7. A motor vehicle folding top system in accordance with one of the claims 4 to 6, characterised in that the lower sections of an articulated support rod or a support rod (18, 19) of every pair of articulated support rods are connected with the supporting device (25).

8. A motor vehicle folding top system in accordance with one of the claims 1 to 7, characterised in that it has a material tightening device (45), preferably with a material tightening bracket (47), which is positioned in a rotatable manner on both lateral supporting devices (23) and is connected with the lower edge of the folding top (13).

9. A motor vehicle folding top system in accordance with claim 8, characterised in that a device for the adjustment of the tension of the material (49) engages with the material tightening bracket (47).

10. A motor vehicle folding top system in accordance with claim 9, characterised in that the material tightening device has two actuating drives (49) which are supported on the motor vehicle (51) on both sides of the motor vehicle in the area of the folding top casing (5).

11. A motor vehicle folding top system in accordance with one of the claims 1 to 10, characterised in that the folding top casing (5) has a swivellable base plate (61), the swivelling axis of which is positioned in the upper, rear area of the folding top casing.

## Revendications

1. Système de capote de véhicule automobile (1) pour cabriolets (3), comportant
une capote pliable (13) dans laquelle est disposée une lunette arrière (43),
une tringlerie qui présente des barres montées de manière articulée (18, 19),
plusieurs arceaux transversaux qui s'étendent dans la direction transversale du véhicule,
un coffre à capote (5) qui peut recevoir la capote (13) pliée,
un volet de capote (7) qui couvre au moins partiellement le coffre à capote (5),
caractérisé par le fait que
dans la zone du coffre à capote (5) est prévu un dispositif support basculant (23) de la tringlerie qui est réalisé sous forme d'une plaque support (25) et peut basculer en direction de l'arrière du véhicule d'une position droite de fermeture de la capote à une position rabattue d'ouverture de la capote.

2. Système de capote de véhicule automobile (1) selon la revendication 1, caractérisé par le fait que la plaque support (25) présente une partie inférieure qui est jointe de manière articulée (29) au véhicule.

3. Système de capote de véhicule automobile selon l'une des revendications 1 et 2, caractérisé par le fait que la plaque support (25) présente une forme à angle aigu, de préférence triangulaire, vers sa partie inférieure.

4. Système de capote de véhicule automobile selon l'une des revendications 1 à 3, caractérisé par le fait que la tringlerie présente deux parties latérales qui présentent chacune quatre barres de tringlerie ou barres articulées (18, 19).

5. Système de capote de véhicule automobile selon la revendication 4, caractérisé par le fait que les barres articulées sont jointes deux à deux de manière articulée par paires (18, 19).

6. Système de capote de véhicule automobile selon la revendication 5, caractérisé par le fait que les deux paires (18, 19) d'un côté sont mutuellement jointes de manière articulée (en 22).

7. Système de capote de véhicule automobile selon l'une des revendications 4 à 6, caractérisé par le fait que les parties inférieures d'une barre articulée ou de tringlerie (18, 19) de chaque paire de barres sont jointes au dispositif support (25).

8. Système de capote de véhicule automobile selon l'une des revendications 1 à 7, caractérisé par le fait qu'il présente un dispositif tendeur d'étoffe (45) comportant de préférence un étrier tendeur d'étoffe (47) qui est disposé tournant sur les deux dispositifs supports latéraux (23) et est joint au bord inférieur de la capote (13).

9. Systeme de capote de véhicule automobile selon la revendication 8, caractérisé par le fait que sur l'étrier tendeur d'étoffe (47) agit un dispositif de réglage de la tension de l'étoffe (49).

10. Système de capote de véhicule automobile selon la revendication 9, caractérisé par le fait que le dispositif tendeur d'étoffe présente deux mécanismes de commande (49) qui sont montés sur le véhicule automobile sur les deux côtés du véhicule dans la zone du coffre à capote (5).

11. Système de capote de véhicule automobile selon l'une des revendications 1 à 10, caractérisé par le fait que le coffre à capote (5) présente une plaque de fond basculante (61) dont l'axe de basculement est situé dans la partie arrière supérieure du coffre à capote.
